# EUROPÄISCHE PATENTSCHRIFT

(11) **EP 1 846 740 B1**
(45) Veröffentlichungstag und Bekanntmachung des Hinweises auf die Patenterteilung: **08.09.2010**
(21) Anmeldenummer: 05731125.0
(22) Anmeldetag: 25.04.2005
(51) Int. Cl.: G01K 1/16, G01K 7/18, H01C 1/14

(54) **SENSORANSCHLUSSLEITER MIT VERMINDERTER WÄRMELEITUNG**
SENSOR CONNECTOR CONDUCTOR WITH REDUCED THERMAL CONDUCTANCE
CONDUCTEURS DE CONNEXION DE CAPTEUR A CONDUCTION THERMIQUE REDUITE

(30) Priorität: 10.02.2005 CH 222052005
(43) Veröffentlichungstag der Anmeldung: 24.10.2007
(73) Patentinhaber: IST AG, CH-9630 Wattwil (CH)
(72) Erfinder: HOLOUBEK, Jiri, CH-9630 Wattwil (CH); POLAK, Jiri, CH-9652 Neu St. Johann (CH); GMÜR, Magnus, CH-9606 Bütschwil (CH)
(74) Vertreter: Andres, Angelika Maria
(86) Internationale Anmeldenummer: PCT/CH2005/000230
(87) Internationale Veröffentlichungsnummer: WO 2006/084392

(56) Entgegenhaltungen:
- EP-A- 1 124 238
- WO-A-97/22130
- FR-A- 2 796 718
- US-A- 5 348 397

## Beschreibung

Die Erfindung bezieht sich auf einen Sensor gemäß dem Oberbegriff des Anspruchs 1 sowie auf ein Verfahren zur Herstellung solcher Sensoren nach dem Oberbegriff des Anspruchs 6.

Solche Sensoren dienen beispielsweise der Messung der Temperatur, wobei ein Schichtwiderstand das aktive Sensorelement darstellt. Der Schichtwiderstand befindet sich auf einem Substrat-Plättchen, das beispielsweise aus Keramik besteht. Solche Temperatursensoren sind beispielsweise aus US-A-5,202,665 und aus DE-C1-100 20 932 bekannt.

Aus EP-B1-1 047 923 ist ein Sensorbauelement bekannt, bei dem auf einen Keramikträger ein Metallfilm aufgebracht ist. Anschlussdrähte sind mit Kontaktflächen des Metallfilms verbunden.

Ein Verfahren zur rationellen Herstellung solcher Sensorbauelemente ist aus EP-A2-1 124 238 bekannt.

Bekannt sind auch kapazitive Feuchtigkeitssensoren, bei denen die Elektroden und die zugehörigen Anschlusspunkte auf einem Substrat angeordnet sind. Ein solche Sensor ist aus WO-A1-00/25120 bekannt.

US 5,348,397 offenbart einen Temperatursensor, bei dem ein auf einem Substratplättchen angeordnetes Sensorelement mittels Anschlussleitern mit einer Auswerteschaltung verbindbar ist. Die Anschlussleiter in US'397 sind aus Kohlenstofffasersträngen mit einer Metallbeschichtung ausgebildet, somit sie eine niedrige Wärmeleitung aufweisen.

Sensoren der vorgenannten Art dienen der Erfassung einer physikalischen Größe, also beispielsweise der Temperatur oder der Feuchtigkeit eines Gases. Unter der Wirkung der physikalischen Größe ändert der Sensor seine Eigenschaften. Bei Temperatursensoren kann dies beispielsweise der elektrische Widerstand des Sensors sein, bei Feuchtigkeitssensoren beispielsweise die Kapazität des Sensors. Der Messwert der physikalischen Größe wird aus den Eigenschaftsänderungen des Sensors mittels einer Auswerteschaltung ermittelt. Der Sensor ist dabei über mindestens zwei elektrische Verbindungen mit der Auswerteschaltung verbunden. Hier besteht nun das Problem, dass durch diese Verbindung mit der Auswerteschaltung der Messwert verfälscht werden kann.

Bei einem Temperatursensor kann die Verfälschung des Messwertes dadurch verursacht werden, dass Wärme vom Sensor auf die Auswerteschaltungen abgeleitet werden kann. Wenn mit dem Temperatursensor niedrige Temperaturen, beispielsweise unter dem Gefrierpunkt, ermittelt werden sollen, kann umgekehrt Wärme von der Auswerteschaltung zum Sensor gelangen und so den Messwert verfälschen.

Bei Sensoren für andere physikalische Größen können ähnliche Probleme auftreten. Bei einem Feuchtesensor ergibt eine Temperaturveränderung am Sensor gegenüber der Temperatur des Gases, dessen Feuchtigkeit zu messen ist, ebenfalls einen falschen Messwert für die Feuchtigkeit.

Der Erfindung liegt die Aufgabe zugrunde, die beschriebenen Probleme zu vermeiden, indem die Wärmeleitung über die Verbindung zwischen Sensor und Auswerteschaltung vermindert wird, um so das Ansprechverhalten und die Genauigkeit zu verbessern.

Die genannte Aufgabe wird erfindungsgemäß durch die Merkmale des Anspruchs 1 gelöst. Vorteilhafte Weiterbildungen der Erfindung ergeben sich aus den abhängigen Ansprüchen.

Nachfolgend wird ein Ausführungsbeispiel der Erfindung anhand der Zeichnung näher erläutert.

Es zeigen:
- Fig. 1: einen Sensor,
- Fig. 2: einen Ausbruch in einem Anschlussleiter und
- Fig. 3: einen Ausschnitt aus einem Anschlussleiter-Rohling.

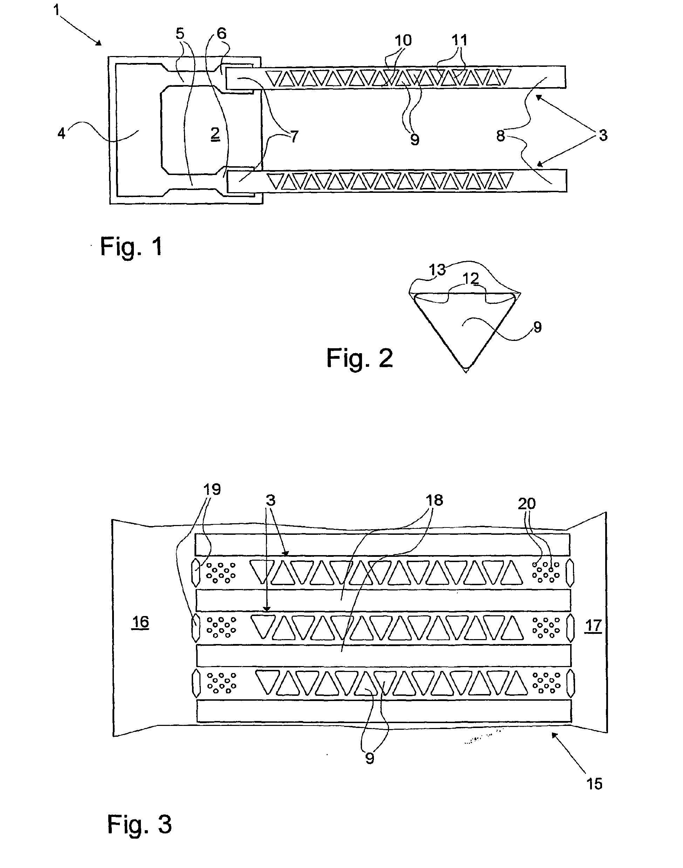

In der Fig. 1 ist ein Sensor 1 gezeigt, der aus einem Substratplättchen 2 und zwei Anschlussleitem 3 besteht. Auf dem Substratplättchen 2 ist ein Sensorelement 4 angeordnet, das hier nur schematisch dargestellt ist. Je nach vom Sensor 1 zu erfassender physikalischer Größe hat dieses Sensorelement 4 einen zweckentsprechenden Aufbau. Ist die zu erfassende physikalische Größe eine Temperatur, so ist das Sensorelement 4 beispielsweise eine Dünnschicht aus einem Werkstoff mit hohem elektrischem Widerstand und kann eine mäanderförmige Struktur aufweisen, wie dies bekannt ist. Vom Sensorelement 4 führen Leiterbahnen 5 zu Anschlusspunkten 6, mit denen die Anschlussleiter 3 beispielsweise durch Widerstandsschweissen elektrisch und mechanisch fest verbunden sind.

Die Anschlussleiter 3 sind durch Ätzen, Stanzen oder Schneiden aus einem Metallblech hergestellt, sind also flächige Teile. Sie weisen beidseitig Enden auf, die Verbindungsflächen 7, 8 sind. Eine erste Verbindungsfläche 7 ist dabei mit einem der Anschlusspunkte 6 verbunden, während eine am anderen Ende des Anschlussleiters 3 befindliche Verbindungsfläche 8 dazu dient, den Sensor 1 mit einer nicht dargestellten Auswerteschaltung zu verbinden. Weil die Verbindungsfläche 8 der Anschlussleiter 3 eben sind, eignen sie sich besonders zur Bestückung nach der Methode der SMD-Technik.

Erfindungsgemäß weisen die Anschlussleiter 3 zwischen den Verbindungsflächen 7 und 8 eine Vielzahl von Ausbrüchen 9 auf, die vorteilhaft dreieckig sind. Benachbarte dreieckige Ausbrüche 9 sind jeweils um 180 Grad gegeneinander verdreht. Im Bereich der Ausbrüche 9 bilden die Anschlussleiter 3 somit ein ebenes Fachwerk aus Längsstegen 10 und schrägen Querstegen 11. Charakteristisch für diese Fachwerke ist, dass die mechanische Belastbarkeit aufgrund der Biegesteifigkeit hoch ist. Gleichzeitig ist aber der für die Wärmeableitung maßgebende Querschnitt sehr deutlich vermindert. Damit wird also erreicht, dass aufgrund der deutlich geringeren Wärmeableitung vom Sensorelement 4 zur Auswerteschaltung und umgekehrt die Ansprechempfindlichkeit des Sensorelements 4 und damit die Genauigkeit der Messung verbessert ist. Die Verminderung des für die Wärmeableitung maßgebenden Querschnitts ist auch durch eine andere Form der Ausbrüche 9 erreichbar, beispielsweise durch kreisrunde, sechseckige oder quadratische Ausbrüche 9, jedoch ist die dargestellte dreieckige Form hinsichtlich Biegesteifigkeit am vorteilhaftesten.

In der Fig. 2 ist ein Ausbruch 9 vergrößert dargestellt. Der Ausbruch 9 ist dreieckig, weist aber Ausrundungen 12 an den Ecken 13 auf. Die Grundform der Dreiecke kann gleichseitig oder gleichschenklig sein. Durch die Ausrundungen 12 wird die Kerbwirkung und somit die Bruchgefahr bei mechanischer Belastung vermindert.

In der Fig. 3 ist ein Teil eines Anschlussleiter-Rohlings 15 gezeigt. Er besteht aus einer Vielzahl von Anschlussleiter 3 mit den Ausbrüchen 9 sowie einem ersten Verbindungssteg 16 und einem zweiten Verbindungssteg 17, wobei zwischen den einzelnen Anschlussleitem 3 Zwischenräume 18 bestehen. An den Übergängen von den einzelnen Anschlussleitem 3 zu den Verbindungsstegen 16, 17 sind vorteilhaft Durchbrüche 19 eingearbeitet, die wie die Ausbrüche 9 und die Zwischenräume 18 durch Ätzen, Stanzen oder Schneiden hergestellt sind. Das Schneiden kann dabei im Hinblick auf die bei solchen Sensoren kleine Bauform vorteilhaft mittels Laserstrahl erfolgen. Die Durchbrüche 19 sind vorteilhaft spitz auslaufend, denn hier ist die Kerbwirkung erwünscht, weil dadurch auf einfache Weise die in EP 1 124 238 A2 beschriebenen Sollbruchstellen zwischen den einzelnen Anschlussleitem 3 und den Verbindungsstegen 16, 17 entstehen. Das ist vorteilhaft, weil dann zur Vereinzelung der einzelnen Sensoren 1 kein Trennwerkzeug erforderlich ist, denn durch die spitz auslaufenden Durchbrüche 19 kann das Abtrennen der Verbindungsstege 16, 17 allein durch leichtes Hin- und Herbiegen bewirkt werden.

Vorteilhaft können die Verbindungsflächen 7 und/oder die Verbindungsflächen 8 (Fig. 1) ebenfalls Durchbrüche aufweisen, nämlich beispielsweise kreisrunde Löcher 20. Werden die Verbindungsflächen 7 mit den Anschlusspunkten 6 (Fig. 1) durch Widerstandsschweißen verbunden, so entsteht wegen dieser Löcher 20 beim Schweißen ein örtlich höherer Stromfluss, was sich positiv auf die Qualität der Schweißverbindung auswirkt. Die Verbindungsflächen 8 werden meist mit Kontakten an der Auswerteschaltung verbunden. Erfolgt diese Verbindung beispielsweise durch Löten, so füllen sich die Löcher 20 wenigstens teilweise mit Lot, was gleichfalls eine Verbesserung der Qualität der Verbindung ergibt.

Die Ausbrüche 9 in den Anschlussleitern 3 bieten noch einen Vorteil dann, wenn der Sensor 1 samt seinen Zuleitungen teilweise in Kunststoff vergossen wird. Die Vergussmasse füllt dann die Ausbrüche 9 aus, so dass eine durchgehende Verbindung mit der Vergussmasse oberhalb und unterhalb der Anschlussleiter 3 besteht.

Die Erfindung kann vorteilhaft auch bei Sensoren angewendet werden, die mehrere physikalische Größen gleichzeitig erfassen.

## Patentansprüche

1. Sensor für die Erfassung physikalischer Größen, bei dem ein auf einem Substratplättchen (2) angeordnetes Sensorelement (4) mittels Anschlussleitem (3) mit einer Auswerteschaltung verbindbar ist, **dadurch gekennzeichnet, dass** die Anschlussleiter (3) flächige, aus einem Metallblech hergestellte Teile sind, und dass zwischen Verbindungsflächen (7, 8) in den Anschlussleitern (3) eine Vielzahl von Ausbrüchen (9) angeordnet ist.

2. Sensor nach Anspruch 1, **dadurch gekennzeichnet, dass** die Ausbrüche (9) dreieckig sind, wobei benachbarte Dreiecke gegeneinander um 180 Grad gedreht sind, so dass die Anschlussleiter (3) als ebenes Fachwerk aus Längsstegen (10) und schrägen Querstegen (11) ausgestaltet sind.

3. Sensor nach Anspruch 2, **dadurch gekennzeichnet, dass** die Ecken (13) der Dreiecke Ausrundungen (12) aufweisen.

4. Sensor nach Anspruch 1 oder 3, **dadurch gekennzeichnet, dass** Verbindungsflächen (7, 8) Durchbrüche aufweisen.

5. Sensor nach Anspruch 4, **dadurch gekennzeichnet, dass** die Durchbrüche kreisrunde Löcher (20) sind.

6. Verfahren zur Herstellung eines Sensors nach den Ansprüchen 1 bis 4, dass in einem einzigen Schritt aus einem Metallblech ein Anschlussleiter-Rohling (15) erzeugt wird, wobei in das Metallblech Zwischenräume (18), Ausbrüche (9) und Durchbrüche (19), sowie allenfalls auch Löcher (20) in einem einzigen Arbeitsschritt durch Ätzen, Stanzen oder Schneiden eingearbeitet werden.

## Claims

1. Sensor for recording physical variables where a sensor element (4), which is arranged on a substrate plate (2), can be connected to an evaluation circuit via connection conductors (3), **characterized in that** the connection conductors are flat parts made of sheet metal, and that numerous nicks (9) are arranged in the connection conductors (3) between the connecting surfaces (7, 8).

2. Sensor as per Claim 1, **characterized in that** the nicks (9) are triangular, where neighboring triangles are rotated 180° vis-A-vis one another, making the connection conductors a planar lattice of longitudinal sections (10) and cross sections (11).

3. Sensor as per Claim 2, **characterized in that** the corners (13) of the triangles are rounded (12).

4. Sensor as per Claim 1 or 3, **characterized in that** the connecting surfaces (7, 8) exhibit openings.

5. Sensor as per Claim 4, **characterized in that** the openings are round holes (20).

6. Process for producing a sensor as per Claims 1 to 4, **characterized in that** a blank connection conductor (15) is created from sheet metal in one single step, where spaces (18), nicks (9), openings (19), and holes (20) if necessary, are worked into the sheet metal in a single production step by a process of etching, perforating or cutting.

## Revendications

1. Capteur destiné à la mesure de grandeurs physiques, pour lequel un élément capteur (4) disposé sur une plaquette de substrat (2) peut être relié avec un circuit d'exploitation au moyen de conducteurs de raccordement (3), **caractérisé en ce que** les conducteurs de raccordement (3) sont constitués de pièces planes fabriquées à partir d'une tôle métallique, et qu'entre les surfaces de liaison (7, 8) sont disposés, dans les conducteurs de raccordement (3), un grand nombre d'évidements (9).

2. Capteur selon la revendication 1, **caractérisé en ce que** les évidements (9) sont triangulaires, des triangles voisins étant tournés de 180 degrés l'un par rapport à l'autre, si bien que les conducteurs de raccordement (3) sont conçus sous la forme d'une structure plane composée de segments longitudinaux (10) et de segments transversaux obliques (11).

3. Capteur selon la revendication 2, **caractérisé en ce que** les angles (13) des triangles présentent des arrondis (12).

4. Capteur selon la revendication 1 ou 3, **caractérisé en ce que** les surfaces de liaison (7, 8) présentent des ouvertures.

5. Capteur selon la revendication 4, **caractérisé en ce que** les ouvertures sont des trous ronds (20).

6. Procédé destiné à la fabrication d'un capteur selon les revendications 1 à 4, avec lequel est fabriquée une ébauche de conducteurs de raccordement (15), en une unique étape et à partir d'une tôle métallique, des espaces intermédiaires (18), des évidements (9) et des ouvertures (19), ainsi qu'éventuellement également des trous (20) étant réalisés dans la tôle métallique, en une unique étape de travail, par gravure, poinçonnage ou découpage.
